(19) Europäisches Patentamt
European Patent Office
Office européen des brevets

(11) **EP 4 299 609 B1**

(12) **EUROPEAN PATENT SPECIFICATION**

(45) Date of publication and mention
of the grant of the patent:
**04.03.2026 Bulletin 2026/10**

(21) Application number: **22759272.2**

(22) Date of filing: **31.01.2022**

(51) International Patent Classification (IPC):
*C08F 8/00* (2006.01)     *C08F 214/26* (2006.01)
*C08F 216/14* (2006.01)    *H01B 3/44* (2006.01)
*C08J 5/00* (2006.01)      *H01B 7/02* (2006.01)
*F16L 9/127* (2006.01)

(52) Cooperative Patent Classification (CPC):
(C-Sets available)
**C08F 214/262; C08F 8/22; C08J 3/20; C08J 5/18;
C09D 127/18; H01B 3/445;** C08J 2327/18;
C08J 2427/12; F16L 9/12            (Cont.)

(86) International application number:
**PCT/JP2022/003646**

(87) International publication number:
**WO 2022/181231 (01.09.2022 Gazette 2022/35)**

(54) **COPOLYMER, MOLDED BODY, EXTRUDED BODY, AND TRANSFER MOLDED BODY**

COPOLYMER, FORMKÖRPER, EXTRUDIERTER KÖRPER UND TRANSFERFORMKÖRPER

COPOLYMÈRE, CORPS MOULÉ, CORPS EXTRUDÉ ET CORPS MOULÉ PAR TRANSFERT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021 JP 2021031112
30.09.2021 JP 2021162079**

(43) Date of publication of application:
**03.01.2024 Bulletin 2024/01**

(73) Proprietor: **DAIKIN INDUSTRIES, LTD.
Osaka 530-0001 (JP)**

(72) Inventors:
• **ISAKA, Tadaharu
Osaka-shi, Osaka 530-0001 (JP)**
• **ZENKE, Yumi
Osaka-shi, Osaka 530-0001 (JP)**

• **YAMAMOTO, Yukari
Osaka-shi, Osaka 530-0001 (JP)**
• **TSUDA, Hayato
Osaka-shi, Osaka 530-0001 (JP)**
• **YAMAGUCHI, Yasuyuki
Osaka-shi, Osaka 530-0001 (JP)**

(74) Representative: **Hoffmann Eitle
Patent- und Rechtsanwälte PartmbB
Arabellastraße 30
81925 München (DE)**

(56) References cited:
**WO-A1-2008/143069     CN-A- 104 558 365
JP-A- 2002 167 488      JP-A- 2003 327 770
JP-A- 2009 059 690      JP-A- 2013 177 574
JP-A- 2013 177 574      JP-A- H07 292 200
US-A1- 2019 143 628**

EP 4 299 609 B1

**(Cont. next page)**

(52) Cooperative Patent Classification (CPC): (Cont.)

C-Sets
**C08F 8/22, C08F 214/262;**
**C08F 214/262, C08F 216/1408**

**Description**

TECHNICAL FIELD

The present disclosure relates to a copolymer, a formed article, an extrusion formed article, and a transfer molded article.

BACKGROUND ART

Patent Document 1 describes an OA device material comprising a tetrafluoroethylene-based copolymer as a component, wherein the tetrafluoroethylene-based copolymer has tetrafluoroethylene unit derived from tetrafluoroethylene and a perfluoro(alkyl vinyl ether) unit derived from perfluoro(alkyl vinyl ether), contains 4.5 to 6.6% by mass of the perfluoro(alkyl vinyl ether) unit with respect to the whole of the monomer units, and contains 20 or less unstable terminal groups per $1 \times 10^6$ carbon atoms. Patent Document 2 discloses copolymers of tetrafluoroethylene (TFE) and a perfluoro(alkyl vinyl ether) (PAVE) with a melt flow rate in the range from 0.1-10 g/10 min for sealing applications. Patent Document 3 discloses blends of TFE/ PAVE copolymers and polytetrafluoroethylene that are suitable for melt-moulding. Patent Document 4 discloses TFE/PAVE copolymers for the manufacturing of pipes.

RELATED ART

PATENT DOCUMENTS

Patent Document 1: Japanese Patent Laid-Open No. 2009-042478
Patent Document 2: JP 2013 177574 A
Patent Document 3: JP H07 292200 A
Patent Document 4: US 2019/143628 A1

SUMMARY OF THE INVENTION

PROBLEM TO BE SOLVED BY THE INVENTION

An object of the present disclosure is to provide a copolymer that hardly deforms even in a molten state, that is capable of easily providing a large-diameter pipe having high dimensional accuracy by extrusion forming, and that is capable of providing a formed article which has extremely good transparency, which has excellent high-temperature pressure resistance, 150°C abrasion resistance, carbon dioxide low permeability, chemical solution low permeability, high-temperature tensile creep property and high-temperature rigidity, which has sufficient water vapor low permeability, and which hardly makes fluorine ions to dissolve out in a chemical solution such as a hydrogen peroxide solution.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 2.7 to 4.9% by mass with respect to the whole of the monomer units, a melt flow rate at 372°C of 0.7 to 1.4 g/10 min, and the number of functional groups of 20 or less per $10^6$ main-chain carbon atoms.
The copolymer of the present disclosure preferably has a melt flow rate at 372°C of 0.7 to 1.3 g/10 min.
According to the present disclosure, an extrusion formed article and a transfer molded article comprising the above copolymer is further provided.
According to the present disclosure, a coated electric wire having a coating layer comprising the above copolymer is further provided.
According to the present disclosure, a formed article comprising the above copolymer, wherein the formed article is a sheet or a pipe is further provided.

EFFECTS OF INVENTION

According to the present disclosure, there can be provided a copolymer that hardly deforms even in a molten state, that is capable of easily providing a large-diameter pipe having high dimensional accuracy by extrusion forming, and that is capable of providing a formed article which has extremely good transparency, which has excellent high-temperature pressure resistance, 150°C abrasion resistance, carbon dioxide low permeability, chemical solution low permeability, high-temperature tensile creep property and high-temperature rigidity, which has sufficient water vapor low permeability, and which hardly makes fluorine ions to dissolve out in a chemical solution such as a hydrogen peroxide solution.

DESCRIPTION OF EMBODIMENTS

Hereinafter, specific embodiments of the present disclosure will be described in detail, but the present disclosure is not limited to the following embodiments.

A copolymer of the present disclosure contains tetrafluoroethylene (TFE) unit and perfluoro(propyl vinyl ether) (PPVE) unit.

The copolymer (PFA) containing TFE unit and PPVE unit is used as a material for forming a transferring pipe for transferring a chemical solution. Such a pipe is commonly produced by extrusion-forming a copolymer using an extrusion forming machine. The copolymer in a molten state discharged from the extrusion forming machine easily deforms due to its own weight before being cooled and solidified and, thus, the larger the diameter of a pipe to be produced, the more difficult it tends to be to achieve high dimensional accuracy. Accordingly, to form a pipe having high dimensional accuracy by melt forming even when the diameter of the pipe is large, demand exists for a copolymer that hardly deforms due to its own weight even in a molten state. Also, from the viewpoint of facilitating the checking of a chemical solution present inside the pipe, demand exists for a copolymer having excellent transparency.

Such a pipe may be used to transfer a chemical solution that should not be mixed with water such as water vapor in the outside air and, thus, as a material for forming such a pipe, demand exists for a material that has excellent chemical solution low permeability and sufficient water vapor low permeability and, also, that suppresses fluorine ions from dissolving out from the material itself. Also, a piping member used to circulate carbon dioxide is required to have carbon dioxide low permeability. In addition, such a pipe may be used to transfer a high-temperature chemical solution and, thus, demand exists for a material further having excellent high-temperature pressure resistance, high-temperature abrasion resistance, high-temperature tensile creep property, and high-temperature rigidity.

In Patent Document 1, the OA device material having the above characteristics is described as being a material exhibiting excellent flexibility and toner releasability, having excellent balance between heat resistance and crack resistance, and having excellent melt extrusion formability. However, the use of this OA device material as a material of a large-diameter pipe is problematic in that a pipe having high dimensional accuracy is not easily obtained and, also, the transparency and the high-temperature pressure resistance of the obtained large-diameter pipe are not sufficient.

It has been found that by suitably regulating the content of PPVE unit, the melt flow rate (MFR), and the number of functional groups of a copolymer containing TFE unit and PPVE unit, a copolymer can be obtained that hardly deforms even in a molten state, that is capable of easily providing a large-diameter pipe having high dimensional accuracy by extrusion forming, and that is capable of providing a formed article which has extremely good transparency, which has excellent high-temperature pressure resistance, 150°C abrasion resistance, carbon dioxide low permeability, chemical solution low permeability, high-temperature tensile creep property and high-temperature rigidity, which has sufficient water vapor low permeability, and which hardly makes fluorine ions to dissolve out in a chemical solution such as a hydrogen peroxide solution.

Moreover, by using the copolymer of the present disclosure, a thick sheet having a uniform thickness can be easily obtained by extrusion forming. Thus, the copolymer of the present disclosure can be utilized not only as a material for a pipe, but also in a broad range of applications such as a material for a sheet.

The copolymer of the present disclosure is a melt-fabricable fluororesin. Being melt-fabricable means that a polymer can be melted and processed by using a conventional processing device such as an extruder.

The content of the PPVE unit of the copolymer is 2.7 to 4.9% by mass with respect to the whole of the monomer units. The content of the PPVE unit of the copolymer is preferably 2.8% by mass or higher, more preferably 2.9% by mass or higher, still more preferably 3.0% by mass or higher, further still more preferably 3.1% by mass or higher, especially preferably 3.2% by mass or higher, and most preferably 3.3% by mass or higher, and preferably 4.8% by mass or lower, more preferably 4.7% by mass or lower, still more preferably 4.6% by mass or lower, especially preferably 4.5% by mass or lower, and most preferably 4.4% by mass or lower. An excessively small content of the PPVE unit of the copolymer fails to provide a formed article having excellent transparency, high-temperature pressure resistance, and 150°C abrasion resistance. An excessively large content of the PPVE unit of the copolymer fails to provide a formed article having sufficient water vapor low permeability and having excellent carbon dioxide low permeability and high-temperature rigidity.

The content of TFE unit of the copolymer is, with respect to the whole of the monomer units, preferably 95.1 to 97.3% by mass, more preferably 95.2% by mass or higher, still more preferably 95.3% by mass or higher, further still more preferably 95.4% by mass or higher, especially preferably 95.5% by mass or higher, and most preferably 95.6% by mass or higher, and is more preferably 97.2% by mass or lower, still more preferably 97.1% by mass or lower, further still more preferably 97.0% by mass or lower, even more preferably 96.9% by mass or lower, especially preferably 96.8% by mass or lower, and most preferably 96.7% by mass or lower. An excessively large content of the TFE unit of the copolymer possibly fails to provide a formed article having excellent transparency, high-temperature pressure resistance, and 150°C abrasion resistance. An excessively small content of the TFE unit of the copolymer possibly fails to provide a formed article having sufficient water vapor low permeability and having excellent carbon dioxide low permeability and high-temperature rigidity.

In the present disclosure, the content of each monomer unit in the copolymer is measured by a $^{19}$F-NMR method.

The copolymer can also contain a monomer unit derived from a monomer copolymerizable with TFE and PPVE. In this case, the content of the monomer unit copolymerizable with TFE and PPVE is, with respect to the whole of the monomer units of the copolymer, preferably 0 to 2.2% by mass, more preferably 0.05 to 1.5% by mass, and still more preferably 0.1 to 1.1% by mass.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 0.7 to 1.4 g/10 min. The MFR of the copolymer is preferably 0.9 g/10 min or more, and preferably 1.3 g/10 min or less and more preferably 1.1 g/10 min or less. Due to that the MFR of the copolymer is in the above range, the copolymer hardly deforms even in a molten state, and a large-diameter pipe having high dimensional accuracy can be easily obtained by extrusion forming. Also, by using such a copolymer, a formed article that has extremely good transparency, that has excellent high-temperature pressure resistance, 150°C abrasion resistance, carbon dioxide low permeability, chemical solution low permeability, high-temperature tensile creep property and high-temperature rigidity, and that has sufficient water vapor low permeability can be obtained. When the MFR of the copolymer is excessively high, it is difficult to produce a large-diameter pipe having high dimensional accuracy and, also, the obtained formed article has poor transparency and as well as poor high-temperature pressure resistance. When the MFR of the copolymer is excessively high, a formed article having excellent 150°C abrasion resistance and high-temperature tensile creep property may not be obtained. When the MFR of the copolymer is 0.9 g/10 min or higher, the extrusion pressure of the copolymer is lowered, the formability of the copolymer is significantly improved, and thus a large-diameter pipe having high dimensional accuracy can be obtained even more easily.

In the present disclosure, the MFR is a value obtained as a mass (g/10 min) of the polymer flowing out from a nozzle having an inner diameter of 2.1 mm and a length of 8 mm per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 20 or less. The number of functional groups per $10^6$ main-chain carbon atoms of the copolymer is preferably 15 or less, more preferably 10 or less, and still more preferably less than 6. Due to that the number of functional groups of the copolymer is in the above range, a formed article can be obtained that has excellent carbon dioxide low permeability, chemical solution low permeability, and high-temperature tensile creep property, and that hardly makes fluorine ions to dissolve out in a chemical solution such as a hydrogen peroxide solution.

For identification of the kind of the functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1\times10^6$ carbon atoms in the copolymer is calculated according to the following formula (A).

$$N = I \times K/t \cdots (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, -CH$_2$COOCH$_3$ and -CH$_2$CONH$_2$ are lower by a few tens of kaysers (cm$^{-1}$) than those of -CF$_2$H, -COF, -COOH free and -COOH bonded, -COOCH$_3$ and -CONH$_2$ shown in the Table, respectively.

For example, the number of the functional group -COF is the total of the number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The functional groups are ones present on main chain terminals or side chain terminals of the copolymer, and ones present in the main chain or the side chains. The number of the functional groups may be the total of numbers of -CF=CF$_2$, -CF$_2$H, -COF, -COOH, -COOCH$_3$, -CONH$_2$ and -CH$_2$OH.

The functional groups are introduced to the copolymer by, for example, a chain transfer agent or a polymerization initiator used for production of the copolymer. For example, in the case of using an alcohol as the chain transfer agent, or a peroxide having a structure of -CH$_2$OH as the polymerization initiator, -CH$_2$OH is introduced on the main chain terminals of the copolymer. Alternatively, the functional group is introduced on the side chain terminal of the copolymer by polymerizing a monomer having the functional group.

By subjecting the copolymer having such a functional group to a fluorination treatment, a copolymer having the number of functional groups within the above range can be obtained. That is, the copolymer of the present disclosure is preferably one which is subjected to the fluorination treatment. Further, the copolymer of the present disclosure preferably has -CF$_3$ terminal groups.

The melting point of the copolymer is preferably 295 to 315°C and more preferably 300 to 310°C. Due to that the melting point is in the above range, the copolymer more hardly deforms even in a molten state. Also, a copolymer that gives a formed article having better high-temperature pressure resistance and high-temperature rigidity can be obtained.

In the present disclosure, the melting point can be measured by using a differential scanning calorimeter [DSC].

The copolymer of the present disclosure preferably has a haze value of 7.5% or less, and more preferably 7.0% or less. Due to that the haze value is in the above range, when the fluorine-containing copolymer of the present disclosure is used to obtain a formed article such as a sheet, a pipe, a piping, a joint, a flowmeter housing, a bottle, or a nut, it is easy to observe the inside of the formed article by visual observation, a camera or the like, and thus it is easy to check the flow rate and the residual quantity of the contents. The haze value can be lowered by regulating the content of the PPVE unit and the melt flow rate (MFR) of the copolymer. In the present disclosure, the haze value can be measured according to JIS K 7136.

The water vapor permeability of the copolymer is preferably 17.0 g·cm/m$^2$ or lower, more preferably 16.0 g·cm/m$^2$ or lower, and still more preferably 15.5 g·cm/m$^2$ or lower. Due to that the content of the PPVE unit, the melt flow rate (MFR), and the number of functional groups of the copolymer containing the TFE unit and the PPVE unit are suitably regulated, the copolymer of the present disclosure has sufficient water vapor low permeability. Accordingly, for example, a pipe obtained by using the copolymer of the present disclosure can suitably be used to transfer a chemical solution that should not be mixed with water such as water vapor in the outside air.

In the present disclosure, the water vapor permeability can be measured under the condition having a temperature of 95°C and for 30 days. Specific measurement of the water vapor permeability can be carried out by a method described in the Examples.

The ethyl acetate permeability of the copolymer is preferably 8.0 g·cm/m$^2$ or lower, and more preferably 7.5 g·cm/m$^2$ or lower. Due to that the content of PPVE unit, the melt flow rate (MFR), and the number of functional groups of the copolymer containing the TFE unit and the PPVE unit are suitably regulated, the copolymer of the present disclosure has excellent low ethyl acetate permeability. That is, by using the copolymer of the present disclosure, a formed article that hardly makes a chemical solution such as ethyl acetate to permeate can be obtained.

In the present disclosure, the ethyl acetate permeability can be measured under the condition of a temperature of 60°C and for 45 days. Specific measurement of the ethyl acetate permeability can be carried out by a method described in the Examples.

The carbon dioxide permeability coefficient of the copolymer is preferably 2,100 cm$^3$·mm/ (m$^2$·24 h·atm) or less, and more preferably 2,000 cm$^3$·mm/(m$^2$·24 h·atm) or less. Due to that the content of the PPVE unit, the melt flow rate (MFR), and the number of functional groups of the copolymer containing the TFE unit and the PPVE unit are suitably regulated, the copolymer of the present disclosure has excellent carbon dioxide low permeability. Accordingly, for example, the formed article obtained by using the copolymer of the present disclosure can suitably be used as a sealing member for preventing a carbon dioxide refrigerant from leaking.

In the present disclosure, the carbon dioxide permeability coefficient can be measured under the condition of a test temperature of 70°C and a test humidity of 0% RH. Specific measurement of the carbon dioxide permeability coefficient can be carried out by a method described in the Examples.

The copolymer of the present disclosure preferably has a tensile strength at 150°C of 20 MPa or higher. Due to that the tensile strength at 150°C is in the above range, even when the formed article is used at high temperatures, the formed article has excellent pressure resistance. The tensile strength at 150°C can be raised by regulating the content of the PPVE unit and the melt flow rate (MFR) of the copolymer. In the present disclosure, the tensile strength at 150°C can be measured according to ASTM D638.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro (or fluorochloro) acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalaknes such as $CF_2ClCFClCF_2CF_3$ and $CF_3CFClCFClCF_3$; hydrofluroalkanes such as $CF_3CFHCFHCF_2CF_2CF_3$, $CF_2HCF_2CF_2CF_2CF_2H$ and $CF_3CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of suspensibility and the economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount, and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, washing and drying the copolymer contained in the aqueous dispersion. Then in the case of obtaining the copolymer as a slurry by the polymerization reaction, the copolymer can be recovered by taking out the slurry from a reaction container, and washing and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and a conventionally known method can be adopted such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$ and -CONH$_2$, and thermally relatively stable functional groups thereof, such as -CF$_2$H, can be converted to thermally very stable -CF$_3$. Consequently, the total number (number of functional groups) of -COOH, -COOCH$_3$, -CH$_2$OH, -COF, -CF=CF$_2$, - CONH$_2$ and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, and halogen fluorides (for example, IF$_5$ and ClF$_3$) .

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas include nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas ($F_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube, and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other copolymers other than the copolymer may be used. The other polymers include fluororesins other than the copolymer, fluoroelastomer, and non-fluorinated polymers.

A method of producing the composition include a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, and is suitably used as a forming material. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-described properties, it is preferable to use the copolymer as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding, and rotolining molding. As the forming method, among these, preferable are extrusion forming, compression molding, and transfer molding; more preferable are extrusion forming and transfer molding from the viewpoint of being able to produce formed articles in a high productivity, and still more preferable is extrusion forming. That is, it is preferable that formed articles are extrusion formed articles, compression molded articles, injection molded articles or transfer molded articles; and from the viewpoint of being able to produce molded articles in a high productivity, being extrusion formed articles or transfer molded articles is more preferable, and being extrusion formed articles is still more preferable. By forming the copolymer of the present disclosure by extrusion forming or transfer molding, a thin visually attractive formed article can be obtained.

The formed article containing the copolymer of the present disclosure may be, for example, a nut, a bolt, a joint, a film, a bottle, a gasket, an electric wire coating, a tube, a hose, a pipe, a valve, a sheet, a seal, a packing, a tank, a roller, a container, a cock, a connector, a filter housing, a filter cage, a flow meter, a pump, a wafer carrier, and a wafer box.

The copolymer of the present disclosure, the above composition and the above formed article can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes;

inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances;

members for waste liquid transport, such as tubes and hoses for waste transport;

members for high-temperature liquid transport, such as tubes and hoses for high-temperature liquid transport;

members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses, and evap hoses. The above fuel transfer members can also be used as fuel transfer members for gasoline additive-containing fuels, resultant to sour gasoline, resistant to alcohols, and resultant to methyl tertiary butyl ether and amines and the like.

The above chemical stoppers and packaging films for chemicals have excellent chemical resistance to acids and the like. The above chemical solution transfer members also include corrosion-proof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure have extremely good transparency, have excellent high-temperature pressure resistance, 150°C abrasion resistance, carbon dioxide low permeability, chemical solution low permeability, high-temperature tensile creep property and high-temperature rigidity, hardly allow fluorine ions to dissolve out in a chemical solution such as a hydrogen peroxide solution, the formed articles can suitably be utilized as nuts, bolts, joints, packings, valves, cocks, connectors, filter housings, filter cages, flow meters, pumps, or the like. Among these, the formed article can suitably be utilized as a piping member (in particular, a valve and a joint) used to transfer a chemical solution or as a flowmeter housing having a flow path for a chemical solution in a flowmeter. The piping member and the flowmeter housing of the present disclosure have extremely good transparency and have excellent high-temperature pressure resistance and high-temperature rigidity. Accordingly, the piping member and the flowmeter housing of the present disclosure have excellent inside-visibility and, especially in the flowmeter housing, enable the float inside to be easily observed by visual observation, a camera or the like, and are hardly damaged even when repeatedly receiving stress resulting from starting and stopping the circulation of a chemical solution or changing the flow rate.

Due to that the formed articles containing the copolymer of the present disclosure have extremely good transparency, have excellent high-temperature pressure resistance, 150°C abrasion resistance, carbon dioxide low permeability, chemical solution low permeability, high-temperature tensile creep property and high-temperature rigidity, hardly allow fluorine ions to dissolve out in a chemical solution such as a hydrogen peroxide solution, the formed articles can suitably be utilized as members to be compressed such as gaskets or packings. The members to be compressed of the present disclosure may be gaskets or packings. The gaskets or packings of the present disclosure have extremely good transparency, have excellent high-temperature pressure resistance and high-temperature rigidity, and hardly dissolve out fluorine ions in a chemical solution such as a hydrogen peroxide solution. Also, the members to be compressed of the present disclosure have excellent carbon dioxide low permeability, and thus can suitably be used as a sealing member for preventing a carbon dioxide refrigerant from leaking.

The members to be compressed of the present disclosure, even when being deformed at a high compression deformation rate, exhibit high resilience. The members to be compressed of the present disclosure can be used in a state of being compressed at a compression deformation rate of 10% or higher, and can be used in a state of being compressed at a compression deformation rate of 20% or higher or 25% or higher. By using the members to be compressed of the present disclosure by being deformed at such a high compression deformation rate, a certain rebound resilience can be retained for a long term and the sealing property and the insulating property can be retained for a long term.

The members to be compressed of the present disclosure, even when being deformed at a high temperature and at a high compression deformation rate, exhibit a high storage elastic modulus, a large amount of recovery, and high resilience. The members to be compressed of the present disclosure can be used at 150°C or higher and in a state of being compression deformed at a compression deformation rate of 10% or higher, and can be used at 150°C or higher and in a state of being compression deformed at a compression deformation rate of 20% or higher or 25% or higher. By using the members to be compressed of the present disclosure by being deformed at such a high temperature and at such a high compression deformation rate, a certain rebound resilience can be retained also at high temperatures for a long term and the sealing property and the insulating property at high temperatures can be retained for a long term.

In the case where the members to be compressed are used in a state of being compressed, the compression deformation rate is a compression deformation rate of a portion having the highest compression deformation rate. For example, in the case where a flat member to be compressed is used in a state of being compressed in the thickness direction, the compression deformation rate is that in the thickness direction. Further, for example, in the case where a member to be compressed is used with only some portions of the member being compressed, the compression deformation rate is that of a portion having the highest compression deformation rate among compression deformation rates of the compressed portions.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. The members to be compressed of the present disclosure are especially suitable as members used in a state of contacting with a non-aqueous electrolyte in the non-aqueous electrolyte batteries. That is, the members to be compressed of the present disclosure may also be ones having a liquid-contact surface with a non-aqueous electrolyte in the non-aqueous electrolyte batteries.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, and may be $LiClO_4$, $LiAsF_6$, $LiPF_6$, $LiBF_4$, $LiCl$, $LiBr$, $CH_3SO_3Li$, $CF_3SO_3Li$, cesium carbonate and the like.

The members to be compressed of the present disclosure can suitably be utilized, for example, as sealing members such as sealing gaskets or sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may be members to be used for the purpose of both of sealing and insulation.

The members to be compressed of the present disclosure, due to being excellent in high-temperature sealability and high-temperature rigidity, can suitably be used under an environment of becoming high temperatures. It is suitable for the members to be compressed of the present disclosure to be used, for example, in an environment where the maximum temperature becomes 40°C or higher. It is suitable for the members to be compressed of the present disclosure to be used, for example, in an environment where the maximum temperature becomes 150°C or higher. Examples of the case where the temperature of the members to be compressed of the present disclosure may become such high temperatures include the case where after a member to be compressed is installed in a state of being compressed to a battery, other battery members are installed to the battery by welding, and the case where a non-aqueous electrolyte battery generates heat.

Due to that the members to be compressed of the present disclosure also have excellent high-temperature sealability and high-temperature rigidity, the members to be compressed can suitably be used as sealing members for non-aqueous electrolyte batteries or insulating members for non-aqueous electrolyte batteries. For example, in the charge time of batteries such as non-aqueous electrolyte secondary batteries, the temperature of the batteries temporarily may become 40°C or higher, specially temporarily become 150°C or higher in some cases. Even when the members to be compressed of the present disclosure are used by being deformed at high temperatures and at a high compression deformation rate, and moreover are brought into contact with non-aqueous electrolytes at high temperatures, in batteries such as non-aqueous electrolyte batteries, a high rebound resilience is not impaired. Therefore, the members to be compressed of the present disclosure, in the case of being used as sealing members, have excellent sealing property and also at high temperatures, retain the sealing property for a long term. Further, the members to be compressed of the present disclosure, due to containing the above copolymer, have excellent insulating property. Therefore, in the case of using the members to be compressed of the present disclosure as insulating members, the members firmly adhere to two or more electrically conductive members and prevents short circuit over a long term.

The copolymer of the present disclosure can suitably be utilized as a material for forming an electric wire coating.

The coated electric wire has a core wire, and the coating layer installed on the periphery of the core wire and containing the copolymer of the present disclosure. For example, an extrusion formed article made by melt extruding the copolymer of the present disclosure on a core wire can be made into the coating layer. The coated electric wires are suitable to LAN cables (Ethernet cables), high-frequency transmission cables, flat cables, heat-resistant cables and the like, and among these, suitable to transmission cables such as LAN cables (Ethernet cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferably 2 mm or smaller.

With regard to specific examples of the core wire, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter) may be used.

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell by image processing and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a molten state on the core wire to thereby form the coating layer.

In formation of a coating layer, by heating the copolymer and introducing a gas in the copolymer in a molten state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a molten state.

The copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that good electric property is provided. The printed wiring boards are not limited, but examples thereof include printed wiring boards of electronic circuits for cell phones, various computers, communication devices and the like. As the (2) formed articles, antenna covers are preferable in that the dielectric loss is low.

Due to that the copolymer of the present disclosure hardly deforms even in a molten state and can easily provide a thick sheet having a uniform thickness and, moreover, the obtained formed article has extremely good transparency, has excellent high-temperature pressure resistance, 150°C abrasion resistance, carbon dioxide low permeability, chemical solution low permeability, high-temperature tensile creep property and high-temperature rigidity, hardly makes fluorine ions to dissolve out in a chemical solution such as a hydrogen peroxide solution, the formed articles can suitably be utilized as films or sheets.

The film of the present disclosure is useful as release films. The release films can be produced by forming the copolymer of the present disclosure by melt extrusion, calendering, press molding, casting or the like. From the viewpoint that uniform thin films can be obtained, the release films can be produced by melt extrusion.

The film of the present disclosure can be applied to the surface of a roll used in OA devices. The copolymer of the present disclosure is formed into required shapes, such as sheets, films or tubes, by extrusion forming, compression molding, press molding or the like, and can be used as surface materials of OA device rolls, OA device belts and the like. A thick sheet and a large pipe can be produced particularly by melt extrusion forming.

The copolymer of the present disclosure hardly deforms even in a molten state, and thus a large-diameter pipe having high dimensional accuracy can be easily obtained by extrusion forming. Moreover, the obtained formed articles have extremely good transparency, have excellent high-temperature pressure resistance, 150°C abrasion resistance, carbon dioxide low permeability, chemical solution low permeability, high-temperature tensile creep property and high-temperature rigidity, and hardly allow fluorine ions to dissolve out in a chemical solution such as a hydrogen peroxide solution. Accordingly, the fluorine-containing copolymer of the present disclosure can suitably be utilized as a tube or a pipe. The pipe containing the fluorine-containing copolymer of the present disclosure can be produced in a high productivity even when the diameter thereof is large and even when the thickness thereof is large, also, has a visually attractive shape, has extremely good transparency, has excellent high-temperature pressure resistance, 150°C abrasion resistance, carbon dioxide low permeability, chemical solution low permeability, high-temperature tensile creep property and high-temperature rigidity, and hardly makes fluorine ions to dissolve out in a chemical solution such as a hydrogen peroxide solution.

Due to that the formed article containing the copolymer of the present disclosure has extremely good transparency, has excellent high-temperature pressure resistance, 150°C abrasion resistance, carbon dioxide low permeability, chemical solution low permeability, high-temperature tensile creep property and high-temperature rigidity, hardly makes fluorine ions to dissolve out in a chemical solution such as a hydrogen peroxide solution, the formed articles can suitably be utilized as a bottle. The bottle of the present disclosure enables the contents to be easily viewed, and is hardly damaged during use.

So far, embodiments have been described, but it is to be understood that various changes and modifications of patterns and details may be made without departing from the subject matter and the scope of the claims.

EXAMPLES

The embodiments of the present disclosure will be described by Examples as follows, but the present disclosure is not limited only to these Examples.

Each numerical value in Examples was measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle having an inner diameter of 2.1 mm and a length of 8 mm at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1\times10^6$ carbon atoms in the sample was calculated according to the following formula (A).

$$N = I \times K/t \cdots (A)$$

I: absorbance
K: correction factor
t: thickness of film (mm)

Regarding the functional groups in the present disclosure, for reference, the absorption frequency, the molar absorption coefficient and the correction factor are shown in Table 2. The molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation), and the melting point was determined from a melting curve peak observed in the second temperature raising step.

Example 1

26.6 L of pure water was charged in a 174 L-volume autoclave; nitrogen replacement was sufficiently carried out; thereafter, 30.4 kg of perfluorocyclobutane, 0.89 kg of perfluoro(propyl vinyl ether) (PPVE), and 0.04 kg of methanol were charged; and the temperature in the system was held at 35°C and the stirring speed was held at 200 rpm. Then, tetrafluoroethylene (TFE) was introduced under pressure up to 0.58 MPa, and thereafter 0.010 kg of a 50% methanol solution of di-n-propyl peroxydicarbonate was charged to initiate polymerization. Since the pressure in the system decreased along with the progress of the polymerization, TFE was continuously supplied to make the pressure constant, and 0.034 kg of PPVE was added for every 1 kg of TFE supplied and the polymerization was continued for 4 hours. TFE was released to return the pressure in the autoclave to the atmospheric pressure, and thereafter, an obtained reaction product was washed with water and dried to thereby obtain 15 kg of a powder.
The obtained powder was melt extruded at 360°C by a screw extruder (trade name: PCM46, manufactured by Ikegai Corp) to thereby obtain pellets of a TFE/PPVE copolymer. The PPVE content of the obtained pellets was measured by the method described above. The results are shown in Table 3.

The obtained pellets were put in a vacuum vibration-type reactor VVD-30 (manufactured by OKAWARA MFG. CO., LTD.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above. The results are shown in Table 3.

Example 2

Fluorinated pellets were obtained as in Example 1, except for changing the charged amount of PPVE to 1.13 kg, adding 0.041 kg of PPVE for every 1 kg of TFE supplied, and changing the polymerization time to 5 hours. The results are shown in Table 3.

Example 3

Fluorinated pellets were obtained as in Example 1, except for changing the charged amount of PPVE to 1.32 kg, changing the charged amount of methanol to 0.06 kg, adding 0.046 kg of PPVE for every 1 kg of TFE supplied, and changing the polymerization time to 5.5 hours. The results are shown in Table 3.

Comparative Example 1

Fluorinated pellets were obtained as in Example 1, except for changing the charged amount of PPVE to 1.76 kg, changing the charged amount of methanol to 0.00 kg, adding 0.058 kg of PPVE for every 1 kg of TFE supplied, and changing the polymerization time to 6 hours. The results are shown in Table 3.

Comparative Example 2

Fluorinated pellets were obtained as in Example 1, except for changing the charged amount of PPVE to 0.77 kg, changing the charged amount of methanol to 0.13 kg, adding 0.031 kg of PPVE for every 1 kg of TFE supplied, and changing the polymerization time to 6 hours. The results are shown in Table 3.

Comparative Example 3

Fluorinated pellets were obtained as in Example 1, except for changing the charged amount of PPVE to 1.17 kg, changing the charged amount of methanol to 0.09 kg, adding 0.042 kg of PPVE for every 1 kg of TFE supplied, and changing the polymerization time to 5.5 hours. The results are shown in Table 3.

Comparative Example 4

Fluorinated pellets were obtained as in Example 1, except for changing the charged amount of PPVE to 1.32 kg, changing the charged amount of methanol to 0.10 kg, adding 0.046 kg of PPVE for every 1 kg of TFE supplied, and changing the polymerization time to 6 hours. The results are shown in Table 3.

Comparative Example 5

Non-fluorinated pellets were obtained as in Example 1, except for changing the charged amount of PPVE to 1.36 kg, adding 0.047 kg of PPVE for every 1 kg of TFE supplied, and changing the polymerization time to 5.5 hours. The results are shown in Table 3.

Comparative Example 6

51.8 L of pure water was charged in a 174 L-volume autoclave; nitrogen replacement was sufficiently carried out; thereafter, 40.9 kg of perfluorocyclobutane, 0.59 kg of perfluoro(propyl vinyl ether) (PPVE), and 2.00 kg of methanol were charged; and the temperature in the system was held at 35°C and the stirring speed was held at 200 rpm. Then, tetrafluoroethylene (TFE) was introduced under pressure up to 0.64 MPa, and thereafter 0.026 kg of a 50% methanol solution of di-n-propyl peroxydicarbonate was charged to initiate polymerization. Since the pressure in the system decreased along with the progress of the polymerization, TFE was continuously supplied to make the pressure constant, and 0.021 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 41.1 kg of a powder.

By using the obtained powder, fluorinated pellets were obtained as in Example 1. The results are shown in Table 3.

[Table 3]

Table 3

|  | PPVE content (% by mass) | MFR (g/10 min) | Number of functional groups (groups/C10$^6$) | Melting point (°C) |
|---|---|---|---|---|
| Example 1 | 3.3 | 0.7 | <6 | 307 |
| Example 2 | 3.9 | 1.0 | <6 | 305 |
| Example 3 | 4.4 | 1.3 | <6 | 302 |
| Comparative Example 1 | 5.5 | 0.7 | <6 | 301 |
| Comparative Example 2 | 3.0 | 1.8 | <6 | 310 |
| Comparative Example 3 | 4.0 | 1.9 | <6 | 304 |
| Comparative Example 4 | 4.4 | 2.2 | <6 | 302 |
| Comparative Example 5 | 4.5 | 1.0 | 51 | 302 |
| Comparative Example 6 | 2.1 | 1.0 | <6 | 312 |

The description "<6" in Table 3 means that the number of functional groups is less than 6.

Then, by using the obtained pellets, the following properties were evaluated. The results are shown in Table 4.

(Haze value)

By using the pellets and a heat press molding machine, a sheet of approximately 1.0 mm in thickness was prepared. The sheet was immersed in a quartz cell filled with pure water, and the haze value was measured according to JIS K 7136 using a haze meter (trade name: NDH 7000SP, manufactured by NIPPON DENSHOKU INDUSTRIES CO, LTD.).

(Water vapor permeability)

By using the pellets and a heat press molding machine, a sheet-shape test piece of approximately 0.2 mm in thickness was prepared. 18 g of water was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the water, and held at a temperature of 95°C for 30 days, and thereafter, the test cup was taken out and allowed to stand at room temperature for 2 hours; thereafter, the amount of the mass lost was measured. The water vapor permeability (g·cm/m$^2$) was determined by the following formula.

Water vapor permeability (g·cm/m$^2$) = the amount of the mass lost (g) × the thickness of the sheet-shape test piece (cm) / the permeation area (m$^2$)

(Tensile strength (TS) at 150°C)

The tensile strength at 150°C was measured according to ASTM D638.

A formed article having high tensile strength at 150°C has excellent pressure resistance.

(Sheet formability)

A φ14 mm extruder (manufactured by Imoto machinery Co., LTD.) and a T die were used to form pellets to prepare a sheet. The extrusion conditions were as follows.

a) Take-up speed: 0.1 m/min
b) Roll temperature: 120°C
c) Film width: 70 mm
d) Thickness: 1.00 mm
e) Extrusion condition:
· Cylinder screw diameter = 14 mm, a single-screw extruder of L/D = 20

Set temperature of the extruder: barrel section C-1 (330°C), barrel section C-2 (350°C), barrel section C-3 (370°C), T die section (380°C)

The extrusion forming of the copolymer was continued until it became possible to stably extrude the copolymer from the forming machine. Then, the copolymer was extrusion-formed to prepare a sheet of 3 m or longer in length (70 mm in width) so as to be 1.00 mm in thickness. The portion of the film at 2 to 3 m from the edge of the obtained sheet was cut to prepare a test piece (1 m in length, 70 mm in length) to measure a variation in thickness. The thickness was measured at a total of three points, i.e., the central point in the width direction of the edge of the prepared sheet and two points 25 mm away from the central point in the width direction. Moreover, the thickness was measured at a total of nine points, i.e., three central points located at an interval of 25 cm from the central point in the width direction of one end of the sheet toward the other end and two points 25 mm away from each central point in the width direction. Concerning the total 12 measured values, the case where the number of measured values outside the range of 1.00 mm ±10% being 1 or less was regarded as good, and the case where the number of measured values outside the range of 1.00 mm ±10% being 2 or more was regarded as poor.

(Pipe formability)

A pipe of 10.0 mm in outer diameter and 1.0 mm in wall thickness was obtained by a φ30-mm extruder (manufactured by Tanabe Plastics Machinery Co., Ltd.). The extrusion conditions were as follows.

a) Die inner diameter: 25 mm
b) Mandrel outer diameter: 13 mm
c) Sizing die inner diameter: 10.5 mm
d) Take-over speed: 0.4 m/min
e) Outer diameter: 10.0 mm
f) Wall thickness: 1.0 mm
g) Extrusion condition

· Cylinder screw diameter = 30 mm, a single screw extruder of L/D = 22

Set temperature of the extruder: barrel section C-1 (350°C), barrel section C-2 (370°C), barrel section C-3 (380°C), head section H-1 (390°C), die section D-1 (390°C), die section D-2

(390°C)

The obtained pipe was observed and evaluated according to the following criteria. The appearance of the pipe was visually checked.

Good: good appearance
Poor: poor appearance, e.g., the cross section is not circular by being flat or having uneven thickness

(Test of own weight deformation in melting)

A formed article of 13 mm in diameter and approximately 6.5 mm in height was prepared by using the pellets and a heat press molding machine. The obtained formed article was cut to prepare a test piece of 6.3 mm in height. The prepared test piece was put in a SUS-made laboratory disk, and heated in an electric furnace at 330°C for 30 min, and thereafter, the test piece together with the laboratory disk was water cooled. There was measured by slide calibers, the diameter of the surface (bottom surface) of the test piece taken out which surface had contacted with the laboratory disk, and the bottom surface area increase rate was calculated by the following formula.

Bottom surface area increase rate (%) = {the bottom area of the test piece after the heating (mm$^2$) - the bottom area of the test piece before the heating (mm$^2$) }/the bottom area of the test piece before the heating (mm$^2$) $\times$ 100

It is meant that the lower the bottom surface area increase rate, the more hardly the formed article deforms by its own weight in melting. The copolymer giving formed articles low in the bottom surface area increase rate is excellent in that even in the case of preparing thick sheets and large pipes by forming the copolymer by extrusion forming, the formed articles in a molten state hardly deform and there can be obtained the formed articles having the desired shapes after being cooled and solidified.

(Abrasion test)

By using the pellets and a heat press molding machine, a sheet of approximately 0.2 mm in thickness was prepared, and a sheet-shape test piece of 10 cm $\times$ 10 cm was cut out therefrom. The prepared test piece was fixed to a test bench of a Taber abrasion tester (No. 101 Taber type abrasion tester with an option, manufactured by YASUDA SEIKI SEISAKUSHO, LTD.), and the abrasion test was carried out using the Taber abrasion tester under the condition of a test piece surface temperature of 150°C, a load of 500 g, an abrasion wheel CS-10 (rotationally polished in 20 rotations with an abrasive paper #240), and a rotation rate of 60 rpm. The weight of the test piece after 1,000 rotations was measured, and the same test piece was further subjected to the test of 5,000 rotations, and then the weight of the test piece was measured. The abrasion loss was determined by the following formula:

$$\text{Abrasion loss (mg)} = M1 - M2$$

M1: the weight of the test piece after the 1,000 rotations (mg)
M2: the weight of the test piece after 5,000 rotations (mg)

(Carbon dioxide permeability coefficient)

By using the pellets and a heat press molding machine, a sheet-shape test piece of approximately 0.1 mm in thickness was prepared. By using the obtained test piece, carbon dioxide permeability was measured with a differential pressure type gas permeation meter (L100-5000 gas permeability meter, manufactured by Systech Illinois) according to the method described in JIS K7126-1:2006. The carbon dioxide permeability value at a permeation area of 50.24 cm$^2$ at a test temperature of 70°C at a test humidity of 0% RH was obtained. The obtained carbon dioxide permeability and the test piece thickness were used to calculate the carbon dioxide permeability coefficient from the following equation.

Carbon dioxide permeability coefficient (cm$^3$·mm/(m$^2$·24 h·atm)) = GTR $\times$ d

GTR: carbon dioxide permeability (cm$^3$/(m$^2$·24 h·atm))
d: test piece thickness (mm)

(Ethyl acetate permeability)

By using the pellets and a heat press molding machine, a sheet-shape test piece of approximately 0.1 mm in thickness was prepared. 10 g of ethyl acetate was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with ethyl acetate, and held at a temperature of 60°C for 45 days, and thereafter, the test cup was taken out and allowed to stand at room temperature for 1 hour, thereafter, the amount of the mass lost was measured. Ethyl acetate permeability (g·cm/m$^2$) was determined by the following formula.

Ethyl acetate (g·cm/m$^2$) = the amount of the mass lost (g) $\times$ the thickness of the sheet-shape test piece (cm) / the permeation area (m$^2$)

(Rate of deflection at 95°C under load)

By using the pellets and a heat press molding machine, a sheet-shape test piece of approximately 3 mm in thickness, and a test piece of 80 $\times$ 10 mm was cut out therefrom and heated in an electric furnace at 100°C for 20 hours.

Except that the obtained test piece was used, a test was carried out according to the method described in JIS K-K 7191-1 with a heat distortion tester (manufactured by YASUDA SEIKI SEISAKUSHO, LTD.) under conditions of a test temperature of 30 to 150°C, a temperature-increasing rate of 120°C/hour, a bending stress of 1.8 MPa, and a flatwise method. The rate of deflection under load was determined by the following formula. A sheet, the rate of deflection at 95°C under load of which is small, has excellent high-temperature rigidity.

$$\text{Rate of deflection under load (\%)} = a2 / a1 \times 100$$

a1: test piece thickness before the test (mm)
a2: amount of deflection at 95°C (mm)

(Tensile creep test)

Tensile creep strain was measured using TMA-7100 manufactured by Hitachi High-Tech Science Corporation. By using the pellets and a heat press molding machine, a sheet of approximately 0.1 mm in thickness was prepared, and a sample of 2 mm in width and 22 mm in length was prepared from the sheet. The sample was attached to the measurement jigs, with the distance between the jigs being 10 mm. A load was applied to the sample such that the cross-sectional load was 2.41 $N/mm^2$, the sample was allowed to stand at 240°C, the displacement (mm) of the length of the sample from 90 minutes after the beginning of the test to 300 minutes after the beginning of the test was measured, and the ratio of the displacement (mm) of the length to the initial sample length (10 mm) (tensile creep strain (%)) was calculated. A sheet, the tensile creep strain (%) of which measured under the condition of a temperature of 240°C and for 300 minutes is small, is hardly elongated even when a tensile load is applied in an extremely high-temperature environment, and has excellent high temperature tensile creep property.

(Extrusion pressure)

The extrusion pressure was measured by using a twin capillary rheometer RHEOGRAPH 25 (manufactured by Goettfert Inc.). There was defined as the extrusion pressure, a pressure value obtained by subjecting, to the Bagley correction, a pressure value in the cylinder after extrusion was carried out by using a main die of 1 mm in inner diameter and 16 in L/D and a sub-die of 1 mm in diameter and lower than 1 in L/D and at a measurement temperature of 390°C, a preheating time after charge of the pellets of 10 min and a shear rate of 20 $sec^{-1}$ for 10 min. A copolymer low in the extrusion pressure is excellent in formability such as extrudability and injection moldability.

(Hydrogen peroxide solution immersion test)

25 g of pellets was immersed in 50 g of a 3% by weight aqueous hydrogen peroxide solution, heated at 90°C for 20 hours in an electric furnace, further heated at 121°C for 1 hour in a sterilizer, and then cooled to room temperature. The pellets were taken out from the aqueous solution, TISAB solution (10) (manufactured by Kanto Chemical Co., Inc.) was added to the remaining aqueous solution, and the fluorine ion concentration in the obtained aqueous solution was measured with a fluorine ion meter. From the obtained measured value, the fluorine ion concentration (the amount of fluorine ions dissolving out) per pellet weight was calculated according to the following formula:

Amount of fluorine ions dissolving out (mass ppm) = measured value (mass ppm) $\times$ amount of aqueous solution (g) / pellet weight (g)

(Dielectric loss tangent)

By melt forming the pellets, a cylindrical test piece of 2 mm in diameter was prepared. The prepared test piece was set in a cavity resonator for 6 GHz, manufactured by Kanto Electronic Application and Development Inc., and the dielectric loss tangent was measured by a network analyzer, manufactured by Agilent Technologies Inc. By analyzing the measurement result by analysis software "CPMA", manufactured by Kanto Electronic Application and Development Inc., on PC connected to the network analyzer, the dielectric loss tangent (tan$\delta$) at 20°C at 6 GHz was determined.

[Table 4]

Table 4

| | Haze value (%) | Water vapor permeability (g·cm/m²) | 150°C Tensile strength (MPa) | Sheet formability | Pipe formability | Test of deformation by own weight (%) | 150°C Abrasion loss (mg) | CO₂ permeability coefficient cm³·mm /(m²·24 h. atm) | Ethyl acetate permeability (g·cm/m²) | Rate of deflection at 95°C under load (%) | 240°C Tensile creep strain (%) | Extrusion pressure (kPa) | Hydrogen peroxide solution immersion test Amount of fluorine ions dissolving out (ppm by mass) | Dielectric tangent |
|---|---|---|---|---|---|---|---|---|---|---|---|---|---|---|
| Example 1 | 6.9 | 14.4 | 20.0 | Good | Good | 16 | 14.4 | 1900 | 7.5 | 60% | 0.56 | 275 | 1.4 | 0.00038 |
| Example 2 | 6.8 | 14.7 | 20.0 | Good | Good | 22 | 14.1 | 1918 | 7.3 | 64% | 0.77 | 214 | 1.7 | 0.00039 |
| Example 3 | 6.7 | 15.3 | 20.0 | Good | Good | 29 | 13.8 | 1945 | 7.2 | 67% | 0.99 | 179 | 1.9 | 0.00040 |
| Comparative Example 1 | 3.8 | 19.7 | 20.5 | - | - | 16 | 11.7 | 2245 | 7.2 | 82% | 0.82 | 275 | 2.4 | 0.00042 |
| Comparative Example 2 | 9.2 | 12,0 | 19.5 | - | - | 39 | 16.2 | 1670 | 7.3 | 51% | 0.82 | 142 | 1.3 | 0.00037 |
| Comparative Example 3 | 8.0 | 14.0 | 19.5 | - | - | 41 | 15.0 | 1810 | 7.1 | 60% | 1.07 | 137 | 1.7 | 0.00039 |
| Comparative Example 4 | 7.7 | 14.2 | 19.5 | - | - | 47 | 14.8 | 1850 | 7.0 | 63% | 1.25 | 124 | 1.9 | 0.00039 |
| Comparative Example 5 | 6.0 | 16.0 | 20.5 | - | - | 22 | 13.3 | 2208 | 9.0 | 70% | 1.26 | 217 | 10.3 | 0.00052 |
| Comparative Example 6 | 9.3 | 9.7 | 19.5 | - | - | 22 | 16.4 | 1639 | 7.6 | 46% | 0.52 | 214 | 0.9 | 0.00035 |

**Claims**

1. A copolymer, comprising tetrafluoroethylene units and, based on the total of monomer units, 2.7-4.9 mass% of perfluoro(propyl vinyl ether) units, and which has a melt flow rate at 372°C of 0.7-1.4 g/10 min, determined according to the method defined in the description, and has a total number of -CF=CF$_2$, -CF$_2$H, -COF, -COOH, -COOCH$_3$, -CONH$_2$ and -CH$_2$OH groups of $\leq$ 20 per $10^6$ main-chain carbon atoms, determined according to the method defined in the description.

2. The copolymer of claim 1, which has a melt flow rate at 372°C of 0.7-1.3 g/10 min, determined according to the method defined in the description.

3. An extrusion formed article, comprising the copolymer of claim 1 or 2.

4. A transfer molded article, comprising the copolymer of claim 1 or 2.

5. A coated electric wire, comprising a coating layer comprising the copolymer of claim 1 or 2.

6. A formed article, which comprises the copolymer of claim 1 or 2 and is a sheet or a pipe.


**Patentansprüche**

1. Copolymer, das Tetrafluorethyleneinheiten und, basierend auf der Gesamtmenge der Monomereinheiten, 2,7-4,9 Massenprozent Perfluor(propylvinylether)-Einheiten umfasst und eine Schmelzflussrate bei 372 °C von 0,7-1,4 g/10 min aufweist, bestimmt gemäß dem in der Beschreibung definierten Verfahren, und eine Gesamtzahl von -CF=CF$_2$-, -CF$_2$H-, -COF-, -COOH-, -COOCH$_3$-, -CONH$_2$- und -CH$_2$OH-Gruppen von $\leq$ 20 pro $10^6$ Kohlenstoffatomen der Hauptkette aufweist, bestimmt gemäß dem in der Beschreibung definierten Verfahren.

2. Copolymer nach Anspruch 1, das eine Schmelzflussrate bei 372 °C von 0,7-1,3 g/10 min aufweist, bestimmt gemäß dem in der Beschreibung definierten Verfahren.

3. Extrusionsgeformter Artikel, umfassend das Copolymer nach Anspruch 1 oder 2.

4. Spritzgepresster Artikel, umfassend das Copolymer nach Anspruch 1 oder 2.

5. Beschichteter elektrischer Draht, umfassend eine Beschichtungsschicht, die das Copolymer nach Anspruch 1 oder 2 umfasst.

6. Geformter Artikel, der das Copolymer nach Anspruch 1 oder 2 umfasst und eine Platte oder ein Rohr ist.


**Revendications**

1. Copolymère, comprenant des motifs tétrafluoroéthylène et, sur la base du total des motifs monomères, 2,7 à 4,9 % en masse de motifs perfluoro(propylvinyléther), et qui présente un indice de fluidité à chaud à 372 °C de 0,7 à 1,4 g/10 min, déterminé selon le procédé défini dans la description, et présente un nombre total de groupes -CF=CF$_2$, -CF$_2$H, -COF, -COOH, -COOCH$_3$, -CONH$_2$ et -CH$_2$OH $\leq$ 20 pour $10^6$ atomes de carbone de la chaîne principale, déterminé selon le procédé défini dans la description.

2. Copolymère selon la revendication 1, qui présente un indice de fluidité à chaud à 372 °C de 0,7 à 1,3 g/10 min, déterminé selon le procédé défini dans la description.

3. Article formé par extrusion, comprenant le copolymère selon la revendication 1 ou la revendication 2.

4. Article moulé par transfert, comprenant le copolymère selon la revendication 1 ou la revendication 2.

5. Fil électrique revêtu, comprenant une couche de revêtement comprenant le copolymère selon la revendication 1 ou la revendication 2.

6. Article formé, qui comprend le copolymère selon la revendication 1 ou la revendication 2 et est une feuille ou un tuyau.

**EP 4 299 609 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009042478 A
- JP 2013177574 A
- JP H07292200 A
- US 2019143628 A1